# EUROPEAN PATENT APPLICATION

(11) **EP 1 580 744 A2**
(43) Date of publication of application: **28.09.2005**
(21) Application number: 05011936.1
(22) Date of filing: 06.06.2001
(51) Int. Cl.: G11B 20/00, G11B 20/18

(54) **Copyrigth protection method, reproduction method, reproduction apparatus, recording method and recording apparatus**

(30) Priority: 06.06.2000 JP 2000169509
(62) Divisional of application: 01112932.7
(71) Applicant: Pioneer Corporation, Tokyo-to (JP)
(72) Inventor: Kuroda, Kazuo, c/o Pioneer Corporation, Tokorozawa-shi, Saitama-ken (JP); Moriyama, Yoshiaki, c/o Pioneer Corporation, Tokorozawa-shi, Saitama-ken (JP); Suzuki, Toshio, c/o Pioneer Corporation, Tokorozawa-shi, Saitama-ken (JP); Yoshida, Kazuyuki, c/o Pioneer Corporation, Tokorozawa-shi, Saitama-ken (JP)
(74) Representative: Reinhard - Skuhra - Weise & Partner

(57) **Abstract**

A copyright protection method for adding copy control information to an information signal in association with contents which are protected under copyright is provided. In the method, attributive information representing the attribution of a predetermined apparatus (2, 3, 4, 6) is added to the information signal when the information signal is propagated via the apparatus. Then, the recording of the information signal is controlled on the basis of the copy control information and the attributive information. For example, even if the copy control information indicates that a copy is allowed since the information signal was propagated via a illegal path (B, D, F), the copy is forbidden since the attributive information indicates an attribution of an reproduction apparatus (6).

## Description

### BACKGROUND OF THE INVENTION

### 1. Field of the Invention

The present invention relates to a copyright protection technique for the contents recorded in an information recording medium. Specifically, the present invention relates to a protection technique against an illegal copy, which provides copy control information to a digital signal corresponding to the contents.

### 2. Description of the Related Art

In recent years, such an art is in widespread use that records various contents such as an image, music and the like as digital signals in the information recording medium or transmits them as the digital signals. Originally, these contents are objects to be protected by copyright. However, if the information recording medium, in which the contents are recorded, are illegally copied and distributed, the copyright thereof is infringed. Therefore, in order to secure the copyright on the contents effectively, various methods for protecting against the illegal copy are required.

In order to protect against the illegal copy for the above described contents, a copy protection system is known such that the contents are protected against the illegal copy upon recording and transmitting them by providing the copy control information to the contents and, for example, embedding the copy control information in the digital signal as a water mark or encrypting it separately. Additionally, a reproduction apparatus and a recording apparatus in conformance with a copy protection system are capable of recognizing the advisability for copying the contents and the number of copying the contents by discriminating such copy control information.

However, in the conventional case, when using the recording apparatus not in conformance with the above described copy protection system, it was difficult to exclude the illegal copy of the contents. For example, in the copy protection system, in the case of copying the contents in which the number of copying is limited to once, it is assumed that update of the copy control information is designated in the recording apparatus so that copies after one copy are forbidden. However, in the case that the information is recorded in the recording medium by the recording apparatus not in conformance with the above described copy protection system, it is not possible to determine that the information has been recorded once from the copy control information, which is recorded in the forgoing recording medium. As a result, there is a possibility that the contents are copied more than once. In this manner, if the contents are propagated by being copied several times via the recording apparatus not in conformance with the illegal copy protection system, there is an obstacle against to protect the contents effectively under the copyright.

### SUMMARY OF THE INVENTION

The present invention has been made taking the foregoing problem into consideration, an object of the invention is to provide a copyright protection method, a reproduction method, a reproduction apparatus, a recording method and a recording apparatus, which are capable of effectively blocking off the propagation of contents illegally copied, and strongly protecting the contents under a copyright.

The above object of the present invention can be achieved by a copyright protection method of the present invention for adding copy control information to an information signal in association with contents which are protected under copyright. The method is provided with the processes of: adding attributive information representing the attribution of a predetermined apparatus to the information signal when the information signal is propagated via the apparatus; and controlling the recording of the information signal on the basis of the copy control information and the attributive information.

According to the present invention, when the information signal in association with the contents is inputted in a predetermined apparatus, the attributive information representing the attribution of this apparatus is added and upon recording the information signal, the recording is controlled on the basis of the copy control information and the attributive information. Therefore, even if the recording apparatus not in conformance with the copy protection system does not appropriately update the copy control information, it is possible to determine the information signal is reproduced through a reproduction apparatus for reproducing the contents, so that the illegal copy of the contents is capable of being effectively prevented.

In one accept of the present invention, the attributive information is added by a reproduction apparatus for reproducing the information signal in association with the contents from a recording medium.

According to this aspect, when the information signal in association with the contents is reproduced by the reproduction apparatus, the attributive information representing the attribution of this reproduction apparatus is added to the information signal, so that it is possible to make the further apparatuses certainly recognize that the information signal is outputted from the reproduction apparatus.

In another aspect of the present invention, the process of controlling the recording of the information signal is a process to forbid the recording the information signal in the case that the copy control information represents a code for allowing the copy of the contents only once and the attributive information represents the attribution of the reproduction apparatus.

According to this aspect, when the attributive information representing the reproduction apparatus and the copy control information for allowing the copy of the contents only once are discriminated on the basis of the information signal in association with the contents, the recording of the information signal is forbidden. Therefore, even if the fact that the information signal is recorded once by the recording apparatus not in conformance with the copy protection system is not reflected in the copy control information, it is possible to recognize that this information signal is reproduced from the recording medium installed in the reproduction apparatus, and this information signal has been recorded once, so that it can be appropriately determined that the information signal should not be recorded any further.

The above object of the present invention can be achieved by a reproducing method of the present invention for reproducing an information signal in association with contents, which are protected under copyright, from a recording medium in accordance with copy control information. The method is provided with the processes of: adding the attributive information representing the attribution of a reproduction apparatus to the information signal when the information signal is reproduced; and outputting the information signal to the exterior.

According to the present invention, it is possible to make other apparatuses except for the apparatuses in conformance with the copy protection system recognize that the contents are reproduced through the reproduction apparatus on the basis of the effect of the above described first aspect, so that the illegal copy of the contents is capable of being effectively prevented.

The above object of the present invention can be achieved by a reproduction apparatus of the present invention for reproducing an information signal in association with contents, which are protected under copyright, from a recording medium in accordance with copy control information. The apparatus is provided with: an adding device for adding attributive information representing the attribution of a reproduction apparatus to the information signal when the information signal is reproduced; and an outputting device for outputting the information signal to the exterior.

According to the present invention, it is possible to make other apparatuses except for the apparatuses in conformance with the copy protection system recognize that the contents are reproduced through the reproduction apparatus on the basis of the effect of the above described first aspect, so that the illegal copy of the contents is capable of being effectively prevented.

In one aspect of the present invention, the adding device replaces a portion of a digital signal in association with the contents with data in accordance with a predetermined pattern in association with the attributive information.

According to this aspect, since a portion of the digital signal, which is externally outputted from the reproduction apparatus, includes a pattern in association with the attributive information representing the attribution of this reproduction apparatus, the attributive information is capable of being simply transmitted without adding the extra signals.

The above object of the present invention can be achieved by a recording method of the present invention for recording an information signal in association with contents, which are protected under copyright, in a recording medium in accordance with copy control information. The method is provided with the processes of: discriminating the copy control information of the information signal and the attributive information representing a predetermined apparatus, via which the information signal is propagated; and controlling the recording of the information signal on the basis of the discrimination result.

According to the present invention, when the information signal in association with the contents is inputted in a predetermined apparatus, the attributive information representing the attribution of this apparatus is added and upon recording the information signal, the recording is controlled on the basis of the copy control information and the attributive information. Accordingly, the recording apparatus is capable of determining whether the recording of the contents is allowable or not by using both of the copy control information and the attributive information, so that the illegal copy of the contents is capable of being effectively prevented.

In one aspect of the present invention, the process of controlling the recording of the information signal is a process to forbid the recording of the information signal in association with the contents in the case that the copy control information represents a code for allowing the copy of the contents only once and the attributive information represents the attribution of the reproduction apparatus.

According to this aspect, even when it is determined that the copy of the contents is allowed only once with reference to the copy control information, the recording apparatus is capable of determining that the information signal is reproduced from the recording medium installed in the reproduction apparatus with reference to the attributive information, so that it can be effectively prevented to illegally copy the contents, which has been recorded once, any more.

The above object of the present invention can be achieved by a recording apparatus of the present invention for recording an information signal in association with contents, which are protected under copyright, in a recording medium in accordance with copy control information. The apparatus is provided with: a discriminating device for discriminating the copy control information of the information signal and attributive information representing a predetermined apparatus, via which the information signal is propagated; and a controlling device for controlling the recording of the information signal on the basis of the discrimination result.

According to the present invention, when the information signal in association with the contents is inputted in a predetermined apparatus, the attributive information representing the attribution of this apparatus is added and upon recording the information signal, the recording is controlled on the basis of the copy control information and the attributive information. Accordingly, the recording apparatus is capable of determining whether the recording of the contents is allowable or not by using both of the copy control information and the attributive information, so that the illegal copy of the contents is capable of being effectively prevented.

In one aspect of the present invention, the controlling device forbids the recording of the information signal in association with the contents in the case that the copy control information represents a code for allowing the copy of the contents only once and the attributive information represents the attribution of a reproduction apparatus.

According to this aspect, even when it is determined that the copy of the contents is allowed only once with reference to the copy control information, the recording apparatus is capable of determining that the information signal is reproduced from the recording medium installed in the reproduction apparatus with reference to the attributive information, so that it can be effectively protected to illegally copy the contents, which has been recorded once, any more.

The above object of the present invention can be achieved by a copyright protection method of the present invention for adding copy control information to an information signal in association with contents which are protected under copyright, the method is provided with: performing an error correction by replacing information at a recording position set in advance with a predetermined attributive information when an information signal, in which error correction codes when the information is replaced with the predetermined attributive information are added, is reproduced from a recording medium; and controlling the recording and the reproduction of the information signal on the basis of the copy control information and the predetermined attributive information.

According to the present invention, an error correction code added upon recording the information signal in the recording medium is generated under the condition that a predetermined recording position is replaced with predetermined attributive information. Upon reproducing this recording medium, the reproduction signal is outputted after the predetermined recording position is replaced with predetermined attributive information and the error correction is provided. Then, the copy control information and the attributive information are used to control the copy in any case of reproduction and recording. Therefore, in the case that the above described error correction code is not appropriately added upon recording the information signal in the recording medium, the errors occur upon processing the reproduction hereafter, so that it is not possible to normally reproduce the information signal. As a result, the illegal copy of the contents is capable of being effectively prevented.

In one aspect of the present invention, the predetermined attributive information has a size exceeding the range of correction capability of the error correction.

According to this aspect, the error correction code, which is generated under the condition that a predetermined recording position is replaced with predetermined attributive information, cannot correct the error of the original recording information due to the limitation of the correcting capability thereof. Therefore, in the case that the attributive information is not replaced, it is possible to certainly exclude the illegal copy of the contents by making the errors occur.

In another aspect of the present invention, the process of controlling the recording and the reproduction of the information signal is a process to forbid the recording of the information signal in the case that the copy control information represents a code for allowing the copy of the contents only once and the predetermined attributive information is detected in the recording position set in advance.

According to this aspect, when the predetermined attributive information and the copy control information to allow the copy of the contents only once are discriminated on the basis of the information signal in association with the contents, the recording of the information signal is forbidden. Therefore, the attributive information is capable of realizing the same effect as that of the third aspect with being processed in the same way as the original information signal, so that it is possible to simply prevent the illegal copy of the contents.

The above object of the present invention can be achieved by a reproducing method of the present invention for reproducing an information signal in association with contents, which are protected under copyright, from a recording medium in accordance with copy control information. The method is provided with the processes of: performing an error correction by replacing information at a recording position set in advance with a predetermined attributive information when an information signal, in which error correction codes when the information is replaced with the predetermined attributive information are added, is reproduced from a recording medium; and outputting a reproduction signal to the exterior.

According to the present invention, it is possible to make other apparatuses except for the apparatuses in conformance with the copy protection system carry out the error correction, in which the fact the contents are reproduced through the reproduction apparatus or not is reflected, so that it is possible to effectively prevent the illegal copy of the contents.

In one aspect of the present invention, the predetermined attributive information has a size exceeding the range of correction capability of the error correction.

According to this aspect, in the case that the reproduction processing is carried out without replacing the predetermined recording position with the predetermined attributive information, the error correction code cannot correct the error of the original recording information due to the limitation of the correcting capability thereof. Therefore, it is possible to certainly exclude the illegal copy of the contents by making the errors occur in the illegal system which does not replace the attributive information.

The above object of the present invention can be achieved by a reproduction apparatus of the present invention for reproducing copy control information in association with contents, which are protected under copyright, from a recording medium in accordance with the copy control information. The apparatus is provided with: an error correction performing device for performing an error correction by replacing information at a recording position set in advance with a predetermined attributive information when an information signal, in which error correction codes when the information is replaced with the predetermined attributive information are added, is reproduced from a recording medium; and an outputting device for outputting a reproduction signal to the exterior.

According to the present invention, it is possible to make other apparatuses except for the apparatuses in conformance with the copy protection system carry out the error correction, in which the fact the contents are reproduced through the reproduction apparatus or not is reflected, so that it is possible to effectively prevent the illegal copy of the contents.

In one aspect of the present invention, the predetermined attributive information has a size exceeding the range of correction capability of the error correction.

According to this aspect, in the case that the reproduction processing is carried out without replacing the predetermined recording position with the predetermined attributive information, the error correction code cannot correct the error of the original recording information due to the limitation of the correcting capability thereof. Therefore, it is possible to certainly exclude the illegal copy of the contents by making the errors occur in the illegal system which does not replace the attributive information.

The above object of the present invention can be achieved by a recording method of the present invention for recording an information signal in association with contents, which are protected under copyright, in a recording medium in accordance with copy control information. The method is provided with the processes of:
discriminating the copy control information of the information signal and predetermined attributive information; controlling the recording of the information signal on the basis of the discrimination result; and
adding error correction codes to the information signal, the error correction codes being ones when information at a recording position set in advance is replaced with the predetermined attributive information.

According to the present invention, it is possible to determine whether or not the recording of the contents is allowable by using both of the copy control information and the attributive information upon recording on the basis of the effect of the above described eleventh aspect, so that the illegal copy of the contents is capable of being effectively prevented.

In one aspect of the present invention, the predetermined attributive information has a size exceeding the range of correction capability of an error correction using the error correction codes.

According to this aspect, the error correction code, which is generated by replacing the predetermined recording position with the predetermined attributive information, does not conform to original recording information, so that it is possible to certainly exclude the illegal copy of the contents by making the errors occur in the illegal system in the case that the above described replacing processing is not carried out.

In another aspect of the present invention, the process of controlling the recording of the information signal is a process to forbid the recording of the information signal in the case that the copy control information represents a code for allowing the copy of the contents only once and the predetermined attributive information is detected in the recording position set in advance.

According to this aspect, even when it is determined that the copy of the contents is allowed only once with reference to the copy control information, the recording apparatus is capable of determining that the information signal should not be recorded in the case that the attributive information is discriminated, so that it can be effectively protected to illegally copy the contents, which has been recorded once, any more.

The above object of the present invention can be achieved by a recording apparatus of the present invention for recording an information signal in association with contents, which are protected under copyright, in a recording medium in accordance with copy control information. The apparatus is provided with: a discriminating device for discriminating the copy control information of the information signal and predetermined attributive information; a controlling device for controlling the recording of the information signal on the basis of the discrimination result; and an adding device for adding error correction codes to the information signal, the error correction codes being ones when information at a recording position set in advance is replaced with the predetermined attributive information.

According to the present invention, it is possible to determine whether or not the recording of the contents is allowable by using both of the copy control information and the attributive information upon recording on the basis of the effect of the above described eleventh aspect, so that the illegal copy of the contents is capable of being effectively prevented.

In one aspect of the present invention, the predetermined attributive information has a size exceeding the range of correction capability of an error correction using the error correction codes.

According to this aspect, the error correction code, which is generated by replacing the predetermined recording position with the predetermined attributive information, does not conform to original recording information, so that it is possible to certainly exclude the illegal copy of the contents by making the errors occur in the illegal system in the case that the above described replacing processing is not carried out.

In another aspect of the present invention, the controlling device forbids the recording of the information signal in the case that the copy control information represents a code for allowing the copy of the contents only once and the predetermined attributive information is detected in the recording position set in advance.

According to this aspect, even when it is determined that the copy of the contents is allowed only once with reference to the copy control information, the recording apparatus is capable of determining that the information signal should not be recorded in the case that the attributive information is discriminated, so that it can be effectively protected to illegally copy the contents, which has been recorded once, any more.

### BRIEF DESCRIPTION OF THE DRAWINGS

FIG. 1 is a block diagram for showing a system structure to explain the concept of a first embodiment of the present invention;
FIG. 2A is a diagram for showing a corresponding relation of a propagation path of a digital signal and copy control information in the case that contents are protected against an illegal copy by using only the copy control information in the system structure shown in FIG. 1 (No. 1);
FIG. 2B is a diagram for showing a corresponding relation of a propagation path of a digital signal and copy control information in the case that contents are protected against an illegal copy by using only the copy control information in the system structure shown in FIG. 1 (No. 2);
FIG. 2C is a diagram for showing a corresponding relation of a propagation path of a digital signal and copy control information in the case that contents are protected against an illegal copy by using only the copy control information in the system structure shown in FIG. 1 (No. 3);
FIG. 3A is a diagram for showing a corresponding relation of the path of a digital signal, the copy control information and attributive information in the case that contents are protected against an illegal copy by using the attributive information in addition to the copy control information in the system structure shown in FIG. 1 (No. 1);
FIG. 3B is a diagram for showing a corresponding relation of the path of a digital signal, the copy control information and attributive information in the case that contents are protected against an illegal copy by using the attributive information in addition to the copy control information in the system structure shown in FIG. 1 (No. 2);
FIG. 3C is a diagram for showing a corresponding relation of the path of a digital signal, the copy control information and attributive information in the case that contents are protected against an illegal copy by using the attributive information in addition to the copy control information in the system structure shown in FIG. 1 (No. 3);
FIG. 4 is a block diagram for showing a schematic structure of a reproduction apparatus in the first embodiment;
FIG. 5 is a diagram for showing an example of a method for adding the attributive information by attributive information addition circuit of the reproduction apparatus in the first embodiment;
FIG. 6 is a block diagram for showing a schematic structure of a recording apparatus in the first embodiment;
FIG. 7 is a flow chart for showing a recording operation which is carried out in the recording apparatus in the first embodiment;
FIG. 8 is a block diagram for showing a system structure to explain the concept of a second embodiment of the present invention;
FIG. 9 is a block diagram for showing a schematic structure of a reproduction apparatus in the second embodiment;
FIG. 10 is a block diagram for showing a schematic structure of a recording apparatus in the second embodiment;
FIG. 11 is a diagram for explaining an ECC block with respect to the relation with the attributive information in the second embodiment;
FIG. 12 is a flow chart for showing a recording operation which is carried out in the recording apparatus in the second embodiment;
FIG. 13 is a flow chart for showing the processing for the attributive information in step S17 of FIG. 12; and
FIG. 14 is a flow chart for showing a reproduction operation which is carried out in the reproduction apparatus in the second embodiment.

### DESCRIPTION OF THE PREFERRED EMBODIMENTS

Preferred embodiments of the present invention will be explained below with reference to the drawings. In the following embodiments, it is described that the present invention is applied to a recording apparatus for performing a recording operation to a disk capable of recording the information signal corresponding to various contents and a reproduction apparatus for performing a reproducing operation to the foregoing disk.

### (First embodiment)

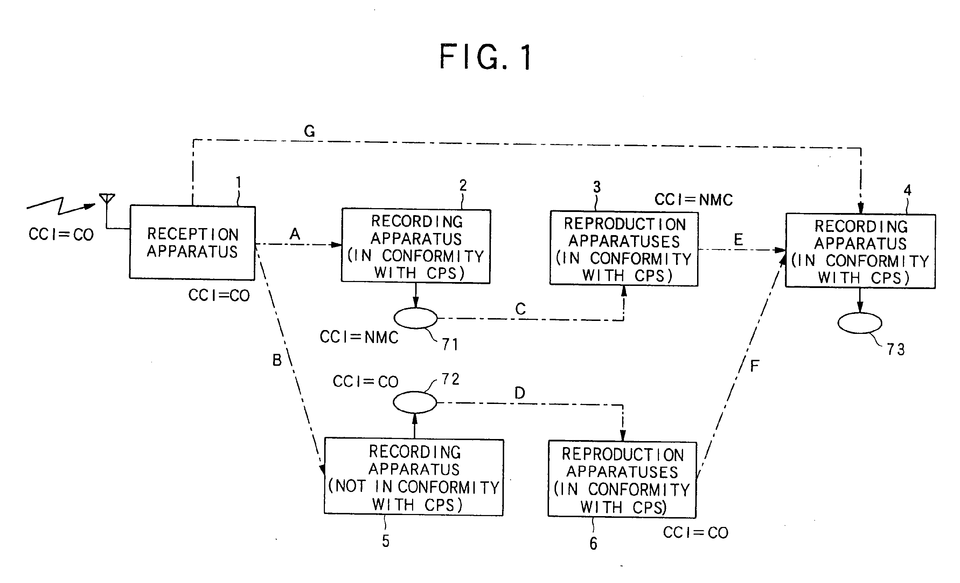

A first embodiment according to the present invention will be explained with reference to FIGS. 1 to 7 below. At first, by employing FIGS. 1 to 3, the first embodiment of the present invention will be generally described. FIG. 1 is a block diagram for showing a system structure to explain the concept of a first embodiment of the invention. In the system structure of FIG. 1, a reception apparatus 1, recording apparatuses 2 and 4 according to the present invention, reproduction apparatuses 3 and 6 according to the present invention, a recording apparatus 5 and disks 71 to 73, in which the digital signal corresponding to the contents is capable of being written, are shown. Among these apparatuses, it is assumed that the recording apparatuses 2 and 4 comply with a CPS (Copy Protection System) in a predetermined recording system and the reproduction apparatuses 3 and 6 comply with a copy protection system in a predetermined reproduction system. On the contrary, it is assumed that the recording apparatus 5 does not comply with the copy protection system in the reproduction system.

The above described copy protection system according to the first embodiment serves to an error the copyright of the contents. Therefore, a method is employed to provide copy control information (CCI) to the digital signal corresponding to the contents and fill the copy control information in the digital signal by the water mark technology. Alternatively, as an example of the copy control information, a code to allow the copy of the contents only once (Copy Once (1, 0)), a code to forbid the copy of the contents (Never Copy (1, 1)), a code to allow the copy of the contents without any inhibition may be cited (Copy Free (0, 0)), a code to copy the contents of the above Copy Once (1, 0) once and forbid the copy of the contents any more (No More Copy (1, 0:1, 1)) and the like may be cited.

In the system structure of FIG. 1, the reception apparatus 1 has a function as a set top box to receive the transmission signal, which is transmitted from the exterior over the air, and demodulate the digital signal corresponding to the contents to output it to the exterior. Here, it is assumed that the Copy Once (1, 0) as the copy control information is set in the digital signal in the reception apparatus 1.

The recording apparatuses 2 and 4 input the digital signal corresponding to the contents from the exterior and carries out the recording operation to the disk installed therein. In this case, the recording apparatuses 2 and 4 determine the copy control information which is given to the digital signal, and control the recording operation in response to the copy protection system in the recording system. The specific structure and the specific operation of the recording apparatuses 2 and 4 will be described later. On the other hand, the structure and the operation of the recording apparatus 5 are in common with those of the recording apparatuses 2 and 4. However, since the recording apparatus 5 does not comply with the copy protection system in the recording system as described above, the recording operation is not carried out on the basis of the copy control information.

Additionally, the reproduction apparatuses 3 and 6 carry out the reproduction operation of the digital signal corresponding to the contents of the disk installed therein and output it to the exterior. In this case, the reproduction apparatuses 3 and 6 discriminate the copy control information which is given to the digital signal, and control the reproduction operation in response to the copy protection system in the reproduction system. Also, the specific structure and the specific operation of the reproduction apparatuses 3 and 6 will be described later.

According to the first embodiment, providing the attributive information representing the attribution of the apparatus, through which the digital signal is propagated, to the digital signal in association with the contents in addition to the above described copy control information allows the contents to be protected more strongly under the copyright. Hereinafter, the function and the role of this attributive information will be explained. Further, a method to an error the contents under the copyright by the use of the attributive information will be explained.

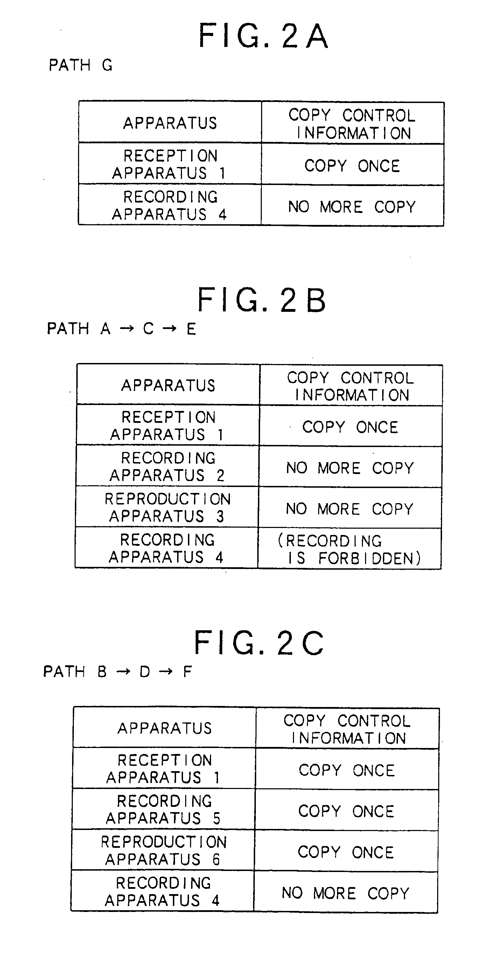

In order to explain a copyright protection method of the first embodiment, the difference between the case of protecting the contents against the illegal copy only by using the copy control information and the case of protecting the contents against the illegal copy by using the attributive information in addition to the copy control information will be explained with reference to FIGS. 1 to 3. FIG. 2 is a diagram for showing a corresponding relation of a propagation path of a digital signal and copy control information in the case that the illegal copy is forbidden by using only the copy control information. FIGS. 2A to 2C show the case that the digital signal outputted from the reception apparatus 1 is recorded in the disk 73 of the recording apparatus 4. FIG. 2A shows the case that the digital signal is recorded via a path G as a propagation path in association with FIG. 1, FIG. 2B shows the case that the digital signal is recorded via paths A, C and E as the propagation path and FIG. 2C shows the case that the digital signal is recorded via paths B, D and F as the propagation, respectively.

In FIGS. 2A to 2C, the Copy Once (1, 0) is set as the copy control information in each digital signal in the reception apparatus 1. Therefore, the copy of the contents is allowed only once hereinafter. In the case shown in FIG. 2A, the digital signal outputted from the reception apparatus 1 is directly inputted in the recording apparatus 4 via the path G to be recorded in the disk 73. In this case, in order to forbid the copy of the contents hereafter, the copy control information is updated to No More Copy (1, 0 : 1, 1) to be provided. Alternatively, the update of the copy control information is carried out by additionally writing the water mark.

Then, in FIG. 2B, the digital signal outputted from the reception apparatus 1 is inputted in the recording apparatus 2 via the path A to be recorded in the disk 71. At the same time, the copy control information is updated to No More Copy (1, 0 : 1, 1). Subsequently, the disk 71 is loaded in the reproduction apparatus 3 via the path C and the digital signal recorded in the disk 71 is reproduced and outputted. Then, the digital output signal from the reproduction apparatus 3 is inputted in the recording apparatus 4 via the path E. In this case, with reference to the copy control information in the recording apparatus 4, it is determined that the copy control information is set in No More Copy (1, 0 : 1, 1), so that the recording the contents in the disk 73 is forbidden.

On the contrary, in the case shown in FIG. 2C, the digital signal outputted from the reception apparatus 1 is inputted in the recording apparatus 5 via the path B to be recorded in the disk 72. In this case, the recording apparatus 5 does not comply with the copy protection system, so that it retains the copy control information as Copy Once (1, 0) without updating the copy control information to No More Copy (1, 0:1, 1). Then, the disk 72 is loaded in the reproduction apparatus 6 via the path D and the digital signal recorded in the disk 72 is reproduced and outputted. The digital output signal from the reproduction apparatus 6 is inputted in the recording apparatus 4 via the path F. However, since the copy control information is set in Copy Once (1, 0), the digital output signal from the reproduction apparatus 6 is not distinguished from the digital signal outputted from the reception apparatus 1, so that the recording the contents in the disk 73 is carried out without being forbidden.

In this way, if the recording apparatus 5, which does not comply with the copy protection system, exists in the propagation path of the digital signal, the copy protection system only by using the copy control information is not capable of being effectively functioned. Therefore, according to the first embodiment, the illegal copy of the contents is effectively prevented for the use of the attributive information as described below.

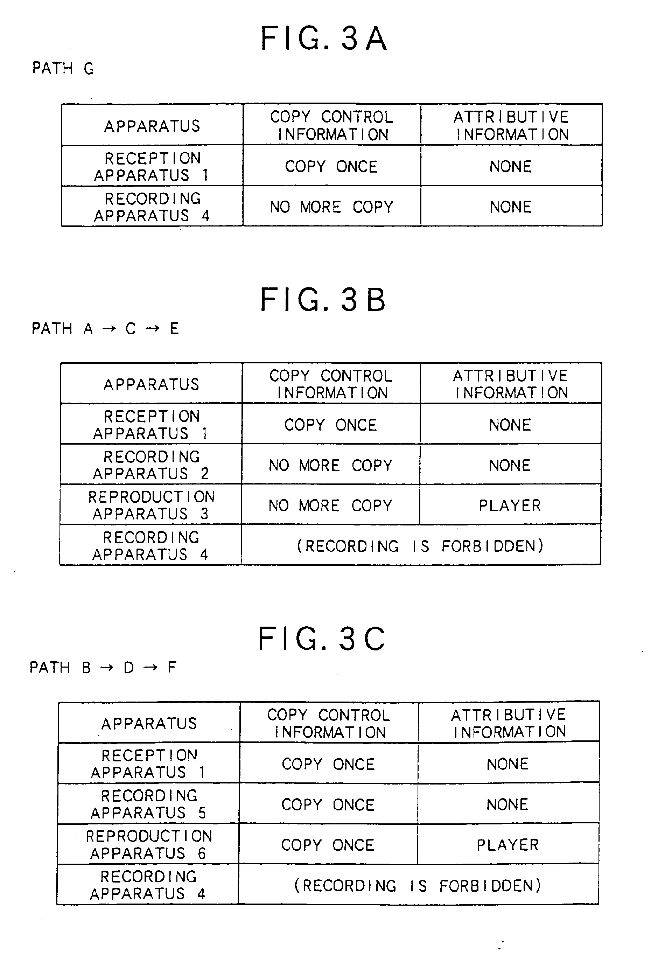

FIG. 3 is a diagram for showing a corresponding relation of the propagation path of the digital signal, the copy control information and the attributive information in the case that the illegal copy is prevented by using the attributive information in addition to the copy control information. In FIG. 3, the attributive information according to the first embodiment comprises the information to be added to the digital signal in the reproduction apparatuses 3 and 6 which are in conformance with the copy protection system and it is composed of a code representing the attribution of the reproduction apparatus (hereinafter, this code is represented as "player"). Alternatively, in the recording apparatuses 2 and 4, which comply with the copy protection system, the attributive information added to the digital signal is referred to be used for controlling the recording operation. Alternatively, a method for adding the attributive information in the reproduction apparatuses 3 and 6 and a method for determining the attributive information in the recording apparatuses 2 and 4 will be described later in detail.

In FIG. 3, a propagation path in the case of recording the digital signal outputted from the reception apparatus 1 in the disk 73 of the recording apparatus 4 is the same as that of FIG. 2. Additionally, the copy control information to be set in the digital signal is the same as that of FIG. 2 except for the recording apparatus 4 in FIG. 3C.

Next, the attributive information shown in FIG. 3 will be described. At first, in the case of FIG. 3A, since the reproduction apparatuses 3 and 6 are not included in the propagation path, the attributive information is not added to the digital signal. On the other hand, in the case of FIG. 3B, if the disk 71 recorded in the recording apparatus 2 is loaded in the reproduction apparatus 3 via the path C, the attributive information "player" is added to the digital signal following the reproduction operation. Then, when the digital output signal from the reproduction apparatus 3 is inputted in the recording apparatus 4 via the path E, the copy control information and the attributive information are referred prior to the recording operation and the recording the contents in the disk 73 is forbidden as the same as the case in FIG. 2B. As a result, in the case of FIG. 3B, the same judgement as that of the case of FIG. 2B is given.

On the contrary, in the case shown in FIG. 3C, when the disk 72 recorded in the recording apparatus 2 is loaded in the reproduction apparatus 6 via the path D, the digital signal is inputted in the recording apparatus 4 via the path E with being added with the attributive information "player" as the same as the case shown in FIG. 3B. On the other hand, as described above, although the copy control information is set in Copy Once (1, 0) as the same as the digital signal outputted from the reception apparatus 1, the attributive information "player" is discriminated in the recording apparatus 4, so that the digital signal is not appropriately propagated as in FIG. 2B. Therefore, it is possible to determine that the illegal copy, which does not conform to the illegal copy protection system, is carried out on the way of the propagation path. As a result, in the case shown in FIG. 3C, it is possible to forbid the copy of the contents in the disk 73 differing from the case shown in FIG. 2C. Thus, the illegal copy is determined by using both of the copy control information and the attributive information, so that it is possible to certainly prevent the illegal copy thereafter even for the digital signal, which is recorded via the recording apparatus 5 not in conformance with the copy protection system.

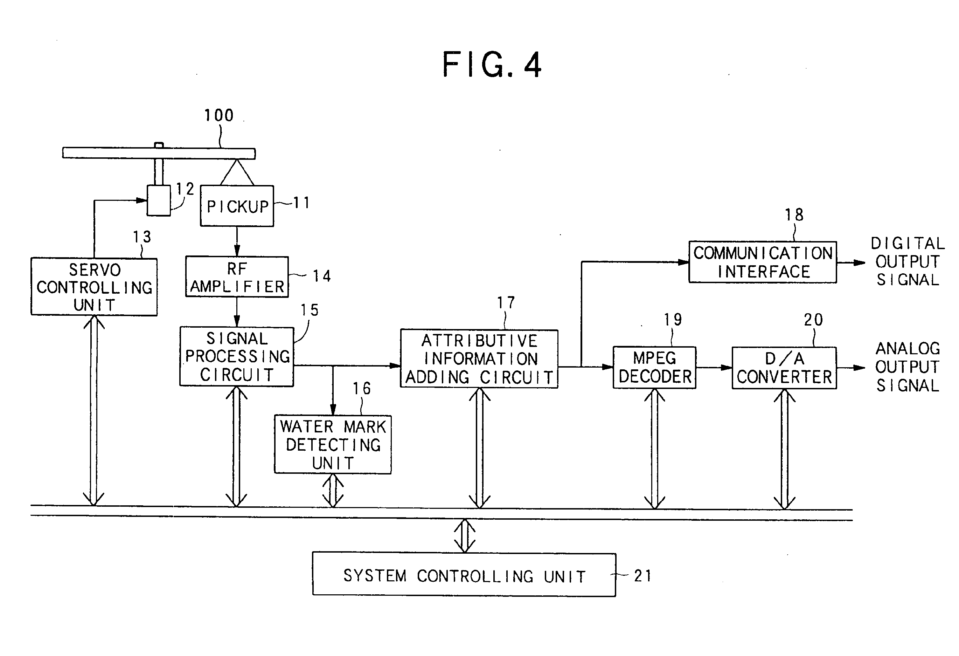

Next, FIG. 4 is a block diagram for showing a schematic structure of the reproduction apparatus 3 in the first embodiment. In this case, the reproduction apparatus 6 has the same structure as that of the reproduction apparatus 3. The reproduction apparatus 3 shown in FIG. 4 is composed of a pick up 11, a spindle motor 12, a servo controlling unit 13, an RF amplifier 14, a signal processing circuit 15, a water mark detecting unit 16, attributive information adding circuit 17, a communication interface 18, an MPEG decoder 19, a D/N converter 20 and a system controlling unit 21.

In the above structure, as a disk 100 to be loaded in the reproduction apparatus 3, for example, a disk, in which the digital signals in association with various contents or the like are recorded in accordance with the DVD format, is employed. If the disk 100 is loaded in the reproduction apparatus 3, the spindle motor 12 rotatably drives the disk 100 while the disk 100 keeps a predetermined linear speed by the servo controlling unit 13. Then, the pick up 11 radiates the laser beam toward the disk 100 and an RF signal is generated on the basis of this reflected light. The RF signal outputted from the pick up 11 is inputted in the RF amplifier 14 to be amplified to a predetermined level. After that, the RF signal is provided with various signal processing such as an error correction processing or the like in the signal processing circuit 15.

The digital signals outputted from the signal processing circuit 15 are inputted in the water mark detecting unit 16 and the attributive information adding circuit 17, respectively. The water mark detecting unit 16 detects the water mark included in the digital signal, i.e., the data embedded in the digital signal as an electronic water mark. According to the first embodiment, the above described copy control information is capable of being extracted from the detected water mark.

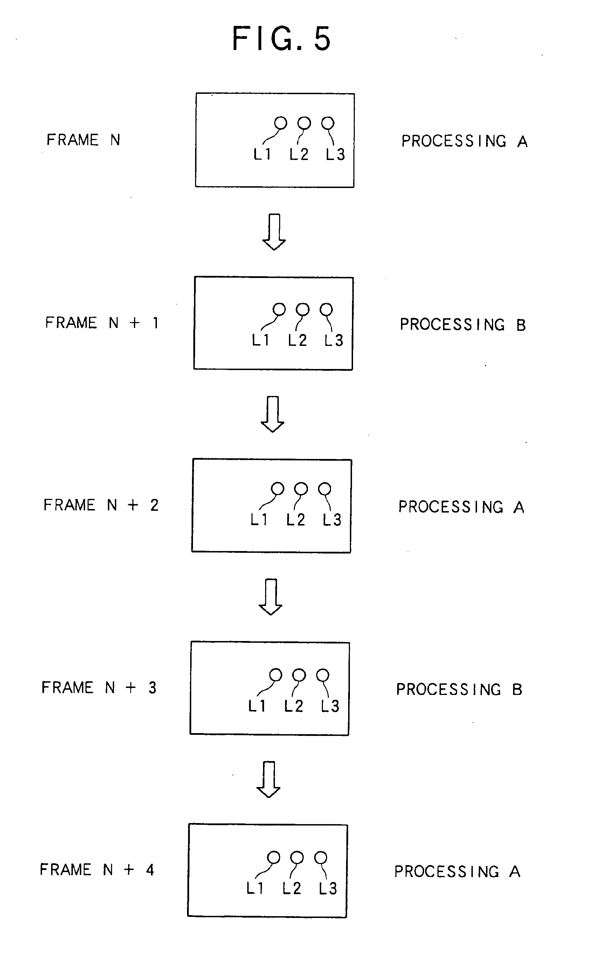

On the other hand, the attributive information adding circuit 17 comprises a circuit for adding the above described attributive information "player" to the digital signal. Here, with reference to FIG. 5, an example of a method for adding the attributive information by the attributive information adding circuit 17 is described. According to the first embodiment, the attributive information adding circuit 17 performs the processing to replace a portion of the frame image data according to a format of a MPEG (Moving Picture Experts Group) with data depending on a predetermined pattern in association with the attributive information "player".

As shown in FIG. 5, the attributive information is added by applying two kinds of the processing A and the processing B, alternately, to the luminance data L1, L2 and L3 among plural and successive frame image data beginning from a frame N. In this case, it is assumed that the luminance data L1 is set at a coordinate position (X1, Y1), the luminance data L2 is set at a coordinate position (X2, Y2) and the luminance data L3 is set at a coordinate position (X3, Y3), respectively. These coordinate positions may be obtained by establishing predetermined positions adjacent to each other in one frame in advance.

The processing A in FIG. 5 comprises a processing for replacing the lower four bits of the luminance data L2 with 0. Alternatively, the processing B in FIG. 5 comprises a processing for replacing the luminance data L2 with an average value between the luminance data L1 and the luminance data L3. Thus, the processing A and the processing B comprise the processing which does not have much effect on original image data. Further, the processing A and the processing B are combined to be used and the processing is alternately performed over a plurality of frames, so that it is possible to lower a possibility such that original image data coincidentally accords with a pattern after processing. Although FIG. 5 shows the case that the processing is repeatedly performed over the five frames, the number of frames to be processed may be appropriately determined.

Returning to FIG. 4, the digital signal outputted from the attributive information adding circuit 17 is outputted to an external apparatus, which is provided with a common communication interface, via the communication interface 18. This communication interface 18 performs a predetermined communication interface operation, for example, in accordance with a specification of IEEE 1394 with respect to an apparatus externally connected.

Similarly, after the digital signal outputted from the attributive information adding circuit 17 is inputted in the MPEG decoder 19 and the extension processing is provided on the basis of the above described MPEG system, the current digital signal is converted into an analog signal by the D/A converter 20 to be outputted to the external apparatus having an analog input.

The system controlling unit 21 shown in FIG. 4 is connected to respective component elements in the reproduction apparatus 3 via a bus to transmit the controlling signal and control the operation entirely. The system controlling unit 21 reads out the controlling program for controlling the reproduction operation with respect to the disk 100 from storing means (not shown) such as a ROM or the like to execute this program.

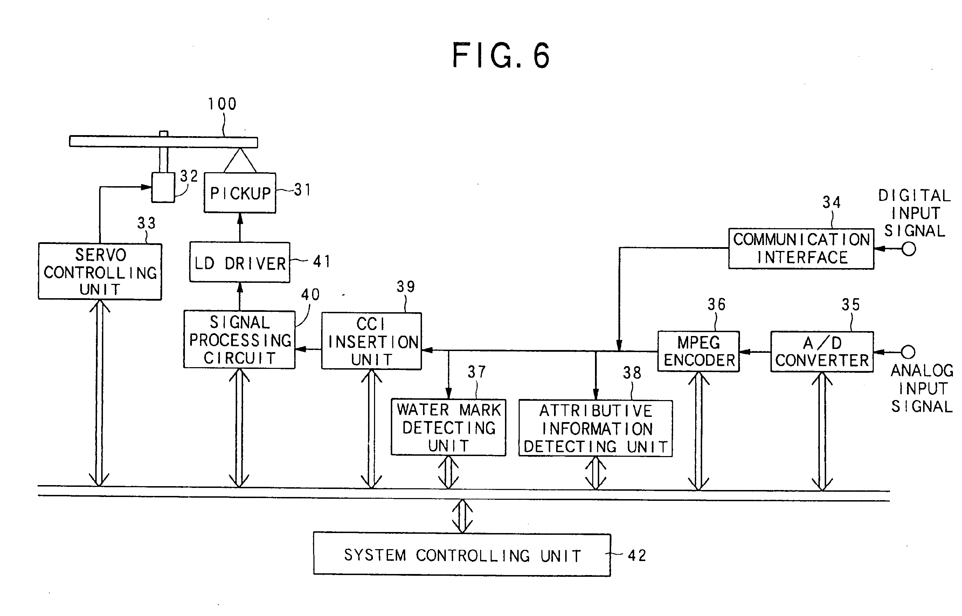

Next, FIG. 6 is a block diagram for showing a schematic structure of the recording apparatus 4 in the first embodiment. The recording apparatus 2 also has the same constitution as that of the recording apparatus 4. The recording apparatus 4 shown in FIG. 6 is composed of a pick up 31, a spindle motor 32, a servo controlling unit 33, a communication interface 34, an A/D converter 35, a MPEG encoder 36, a water mark detecting unit 37, attributive information detecting unit 38, a CCI insertion unit 39, a signal processing circuit 40, an LD driver 41 and a system controlling unit 42.

In the above structure, as the disk 100 to be loaded in the recording apparatus 4, for example, a DVD capable of recording the information signal is employed as the same as that used in the reproduction apparatus 3. When this disk 100 is loaded in the recording apparatus 4, the disk 100 is rotatably driven by the spindle motor 32 with remaining a predetermined linear speed by the servo controlling unit 33. Then, the pick up 31 radiates the laser beam to the disk 100 and a predetermined information signal is written in the disk 100. The information signal to be written in the disk 100 is generated on the basis of the analog input signal or the digital input signal to be inputted from the exterior as below.

At first, the digital input signal inputted from the external apparatus is inputted via the communication interface 34. This communication interface 34 performs a predetermined communication interface operation, for example, in accordance with a specification of IEEE 1394 with respect to an apparatus externally connected. On the other hand, the A/D converter 35 samples the analog input signal inputted from the external apparatus to convert it into the digital signal. The digital signal outputted from the A/D converter 35 is provided with the compression processing by the MPEG encoder 36 on the basis of the MPEG system.

Next, the output signals from the communication interface 34 or the MPEG encoder 36 are inputted in the water mark detecting unit 37, the attributive information detecting unit 38 and the CCI insertion unit 39, respectively. The water mark detecting unit 37 detects the water mark included in the digital signal, i.e., the data embedded in the digital signal as an electronic water mark. According to the first embodiment, by extracting the above described copy control information from the detected water mark, it is possible to determine whether the recording the digital input signal in association with the contents in the disk 100 is allowed or not.

The attributive information detecting unit 38 detects the attributive information added to the digital signal. Therefore, the attributive information detecting unit 38 may have a function to determine a predetermined code included in a portion of the digital signal in association with the above described attributive information adding circuit 17. For example, in the case that the attributive information is added to the digital signal as shown in FIG. 5, by reading out the luminance data L1, L2 and L3 among the frame image data and carrying out a reverse calculation against the attributive information adding circuit 17, it is possible to determine that the attributive information "player" is added to the digital signal.

The CCI insertion unit 39 inserts the water mark, in which the copy control information is updated on the basis of the detection result due to the water mark detecting unit 37, into the digital signal to be recorded in the disk 100. For example, in the case that the original copy control information of the digital input signal is set in Copy Once (1, 0), the above processing corresponds to the processing such that the original copy control information Copy Once (1, 0) is updated to No More Copy (1, 0 : 1, 1) to forbid the copy thereafter.

The output signal from the CCI insertion unit 39 is outputted to the LD driver 41 after it is inputted in the signal processing circuit 40 and it is provided with the signal processing such as the error correction processing or the like. The LD driver 41 supplies a driving signal in association with the digital signal to be recorded to a semiconductor laser device of the pick up 31. Hereby, the digital signal in association with predetermined contents is recorded in the disk 100 which is loaded in the LD driver 41.

The system controlling unit 42 shown in FIG. 6 is connected to respective component elements in the recording apparatus 4 via a bus to transmit the controlling signal and control the operation entirely. The system controlling unit 42 reads out the controlling program for controlling the recording operation with respect to the disk 100 from storing means (not shown) such as a ROM or the like to execute this program.

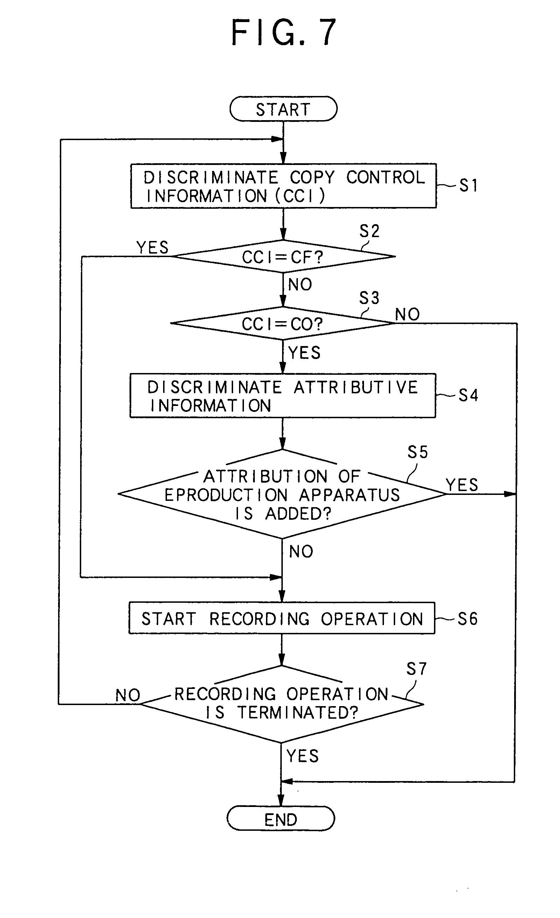

Next, with reference to a flow chart in FIG. 7, the recording operation to be carried out in the recording apparatus 4 according to the first embodiment will be described below. In the processing shown in FIG. 7, mutual authentication is performed with respect to the external connection apparatus such as the reception apparatus 1 or the like to start the input of the digital signal. Then, on the basis of the detection result by the water mark detecting unit 37, the above described copy control information (CCI) set in the digital input signal is discriminated (step S1).

Next, on the basis of the determination result of the step S1, it is determined whether or not the copy control information is set in Copy Free (0, 0) (CF) (step S2). In other words, the digital input signal in Copy Free (0, 0) is determined in the step S2 since it is not needed to carry out the processing for preventing the copy. When the determination result in the step S2 is "YES", the processing proceeds to step S6 to immediately start the recording operation.

When the determination result in the step S2 is "NO", it is determined whether or not the copy control information is set in Copy Once (1, 0) (CO) (step S3). In other words, it is determined whether the copy control information is set in Copy Once (1, 0) (CO) as a condition to allow the recording as shown in FIG. 3. When the determination result in the step S3 is "NO", the copy control information is set in No More Copy (1, 0 : 1, 1) or set in Never Copy (1, 1) and the recording to the disk 100 is forbidden, so that the processing in FIG. 7 is terminated.

On one hand, when the determination result in the step S3 is "YES", the attributive information added to the digital input signal is discriminated on the basis of the detection result of the attributive information detecting unit 38 (step S4). Then, it is determined whether or not the attributive information "player" representing the attribution of the reproduction apparatus is added to the digital input signal (step S5). When the determination result in the step S5 is "YES", the recording to the disk 100 is forbidden as described above, so that the processing in FIG. 7 is terminated.

On the other hand, when the determination result in the step S5 is "NO", it is determined that the digital input signal is not copied illegally to start the recording operation to the disk 100 (step S6). Hereby, the digital signal in association with the contents is written in the disk 100. Alternatively, the copy control information of the digital input signal is updated to No More Copy (1, 0 : 1, 1) to be additionally inserted as the water mark as described above.

Subsequently, it is determined whether or not all recording operations in the recording apparatus 4 are terminated (step S7). When the determination result in the step S7 is "NO", the processing returns to step S1 to repeat the same processing. When the determination result in the step S7 is "YES", the processing in FIG. 7 is terminated.

As described above, according to the structure of the first embodiment, even if the digital signal in association with the contents is propagated via the recording apparatus 5 not in conformance with the illegal copy protection system, it is possible to forbid the recording to the disk 73 by adding the attributive information to the digital signal in the reproduction apparatus 6 and by discriminating the attributive information in the recording apparatus 4. Therefore, in the case that the copy of the contents is allowed only once, it is possible to avoid the situation that the copy not less than twice is illegally carried out, so that the protection level by the copyright with respect to the contents is capable of being more improved.

### (Second embodiment)

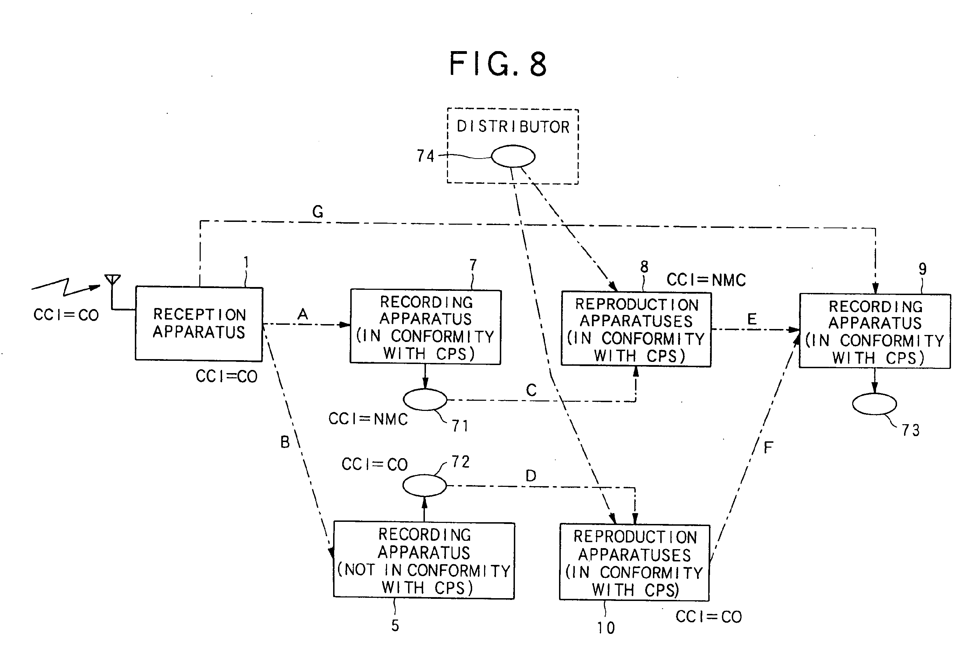

Next, with reference to FIGS. 8 to 14, a second embodiment according to the present invention will be described below. At first, the second embodiment will be generally explained with reference to FIG. 8. FIG. 8 is a block diagram for showing a system structure to explain the concept of the second embodiment. In the structure of FIG. 8, a reception apparatus 1, recording apparatuses 7 and 9 according to the present invention, reproduction apparatuses 8 and 10 according to the present invention, a recording apparatus 5, disks 71 to 73, in which the digital signal in association with the contents is capable of being written and a prerecorded disk 74, in which the contents are recorded in advance, to be supplied from the distributor or the like, are shown.

The basic system structure in the second embodiment shown in FIG. 8 is common to that of the first embodiment shown in FIG. 1. However, the basic system structure in the second embodiment is different from that of the first embodiment in that it used the error correction processing to add the attributive information thereto. Therefore, the structure and the operation in the recording apparatuses 7, 9 and the reproduction apparatuses 8, 10 shown in FIG. 8 are partially different from those in the recording apparatuses 2, 4 and the reproduction apparatuses 3, 6 shown in FIG. 1. The differences will be described later in detail. Additionally, in the system structure in FIG. 8, the reception apparatus 1, the recording apparatus 5 which does not comply with CPS and the disks 71 to 73 are the same as those in the first embodiment. Further, in the system structure in FIG. 8, a method for employing the copy control information is the same as that in the first embodiment.

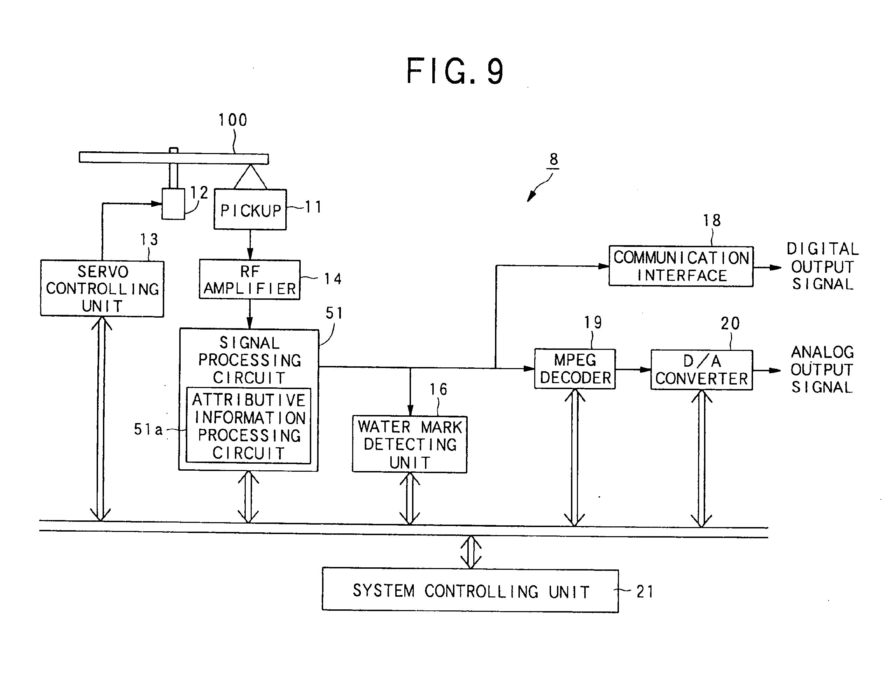

Next, FIG. 9 is a block diagram for showing a schematic structure of the reproduction apparatus 8 in the second embodiment. The reproduction apparatus 10 also has the same constitution as that of the reproduction apparatus 8. The reproduction apparatus 8 shown in FIG. 9 is composed of a pick up 11, a spindle motor 12, a servo controlling unit 13, an RF amplifier 14, a water mark detecting unit 16, a communication interface 18, an MPEG decoder 19, a D/A converter 20, a system controlling unit 21 and a signal processing circuit 51.

As compared to the first embodiment in FIG. 4, the above described structures are different from those of the first embodiment in that the attributive information adding circuit 17 is not included but attributive information processing circuit 51a is included in the signal processing circuit 51. However, other structures are the same as the structures in FIG. 4, so that the explanations thereof are herein omitted.

The signal processing circuit 51 applies various signal processing such as the error correction processing or the like to an RF signal outputted from the RF amplifier 14. The attributive information processing circuit 51a applies the error correction processing to the ECC block set in advance after replacing a predetermined data area with predetermined attributive information. In other words, as described later, according to the second embodiment, upon recording the information signal in the disk 100, the processing is applied so that the error correction is properly carried out in the case the predetermined data area of the determined ECC block is replaced with the predetermined attributive information. Therefore, if the reproduction apparatus, which does not carry out such a replacement, carries out the reproduction operation of the disk 100 in association with the second embodiment, the error occurs, so that the correct reproduction cannot be performed. Alternatively, the processing to be carried out by the attributive information processing circuit 51a will be described later in detail.

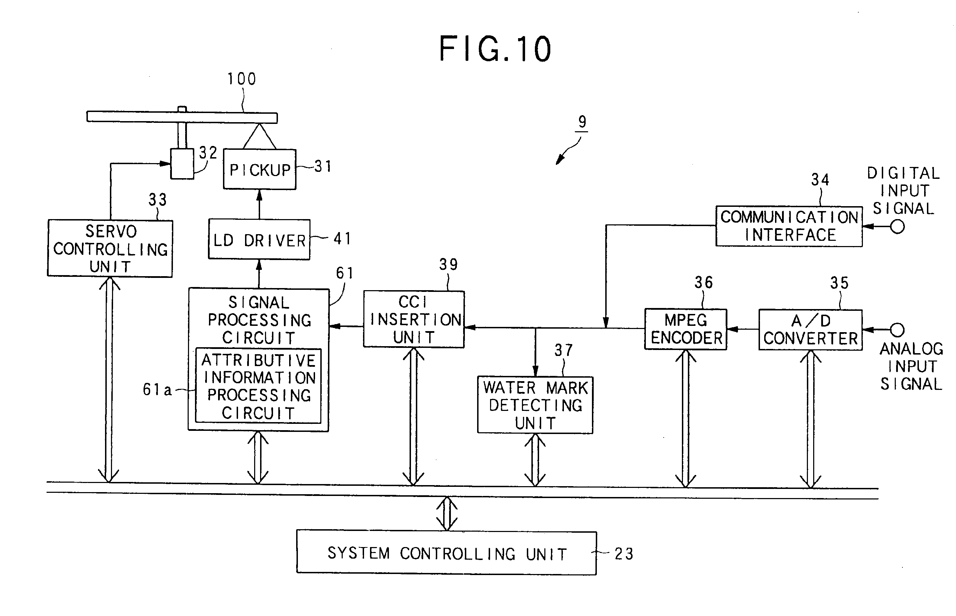

FIG. 10 is a block diagram for showing a schematic structure of a recording apparatus 9 in the second embodiment. The recording apparatus 7 also has the same constitution as that of the recording apparatus 9. The recording apparatus 9 shown in FIG. 10 is composed of a pick up 31, a spindle motor 32, a servo controlling unit 33, a communication interface 34, a A/D converter 35, a MPEG encoder 36, a water mark detecting unit 37, a CCI insertion unit 39, an LD driver 41, a system controlling unit 42 and a signal processing circuit 61.

As compared to the first embodiment in FIG. 6, the above described structures are different from those of the first embodiment in that the attributive information detecting unit 38 is not included but attributive information processing circuit 61a is included in the signal processing circuit 61. However, other structures are the same as the structures in FIG. 6, so that the explanations thereof are herein omitted.

The signal processing circuit 61 applies various signal processing such as the error correction processing or the like to an output signal outputted from the CCI insertion unit 39. Then, after adding the error correction code when a predetermined data area is replaced with predetermined attributive information to the ECC block set in advance, the attributive information processing circuit 61a applies the processing to return the predetermined data area to the original data. In other words, in cooporation with the processing carried out in the above described reproduction apparatus 8, the above processing serves to prevent the illegal recording operation and the illegal reproduction operation without using the attributive information. Alternatively, the processing to be carried out by the attributive information processing circuit 61a will be described later in detail.

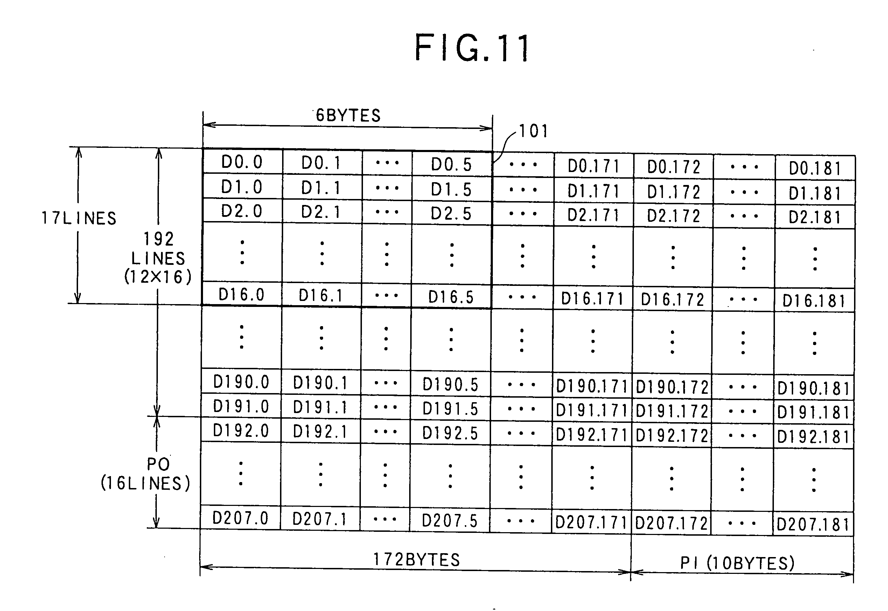

Next, with reference to FIG. 11, a relation between the ECC block and the attributive information will be explained below. The ECC block is dealt as a data unit in the error correction processing upon recording the information signal in the disk 100 or reproducing it from the disk 100. As shown in FIG. 11, the ECC block comprises a block in units of continuous sixteen sectors and has a data structure such that 192 data lines of 172 bytes are set in array. Further, PO (Parity Out) parity of 16 bytes is added to each row of 172 rows and PI (Parity In) parity is added to each line of 208 lines including the PO parity line. The PO parity and the PI parity serve as the error correction code. The PO parity corresponds to the ECC exterior code to be used for the error correction and the PI parity corresponds to the ECC interior code to be used for the error correction, respectively.

According to the second embodiment, as shown in FIG. 11, a predetermined data area 101 including the data of 102 bytes, i.e., 17 lines × 6 bytes, is set to the ECC block set in advance. This data area 101 corresponds to a recording position, which is set in advance in order to replace the data originally stored with a predetermined data row for showing the attributive information of the reproduction apparatus upon obtaining the PO parity and the PI parity. Alternatively, in FIG. 11, a data area 101 is set on the upper left in the ECC block. However, the data area 101 may be set on the other part in the ECC block. Further, the data row of 102 bytes for showing the attributive information of the reproduction apparatus may be appropriately set.

The size of the data area 101 is 17 lines × 6 bytes for the following reason. Namely, upon performing the error correction processing with respect to the ECC block, the maximum size of the area capable of correcting the error is 16 lines × 5 bytes in association with the error correction capability on the basis of the above PO parity and the PI parity. Therefore, if the data area 101 is set larger than 16 lines × 5 bytes, it is not possible to correct the generated error even when the error correction processing is applied to the ECC block. According to the after-mentioned reproduction processing, the error occurs on purpose when the data in the data area 101 is not replaced with the attributive information and the occurred error exceeds the limitation of the correction capability, so that the reproduction cannot be realized. Thus, the second embodiment intends to prevent the illegal copy by using the error correction processing for the ECC block and improve the protection of the contents by the copyright.

It is desirable that the address of the ECC block and the position of the data area 101, in which the processing shown in FIG. 11 is applied, are set in an area which are not used practically, such as an unused user area and an unused reserved area. In other words, as described later, upon the reproduction operation, the original data recorded in the data area 101 is not reproduced, so that the reproduction of the contents is not influenced thereby.

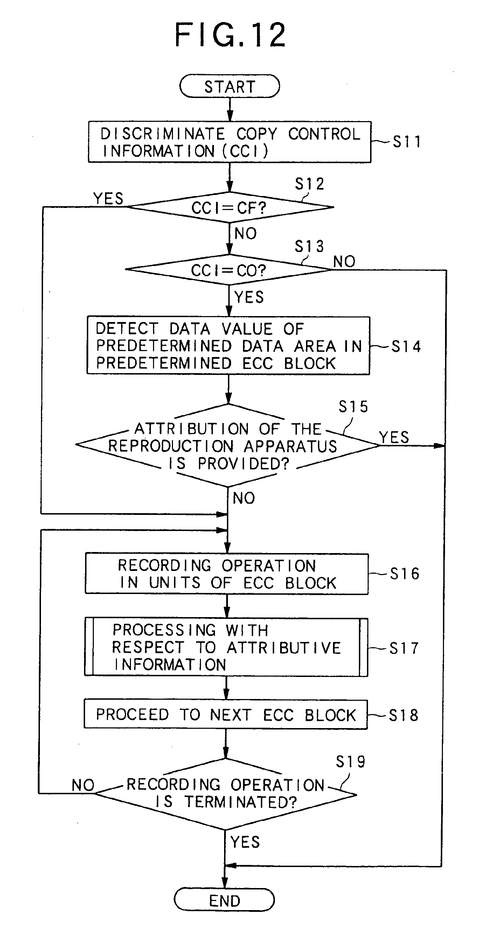

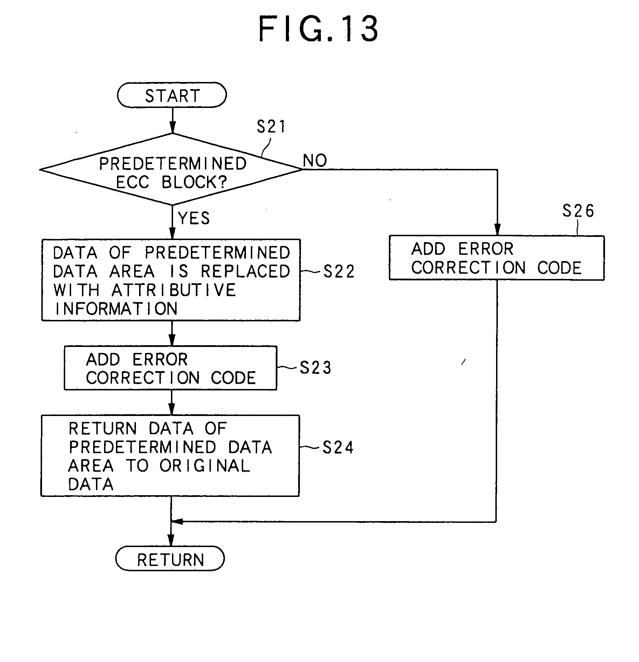

Next, with reference to the flow charts in FIGS. 12 and 13, the recording operation to be carried out in the recording apparatus 9 according to the second embodiment will be explained below. If the recording operation is started in the recording apparatus 9, the copy control information (CCI) is discriminated as the same as the step S1 of FIG. 7 (step S11). Subsequently, it is determined whether or not the copy control information is set in Copy Free (0, 0) (CF) (step S12). Then, if the determination result is "YES", the processing proceeds to step S 16 to immediately start the recording operation.

If the determination result in the step S12 is "NO", it is determined whether or not the copy control information is set in Copy Once (1, 0) (CO) (step S 13). Further, if the determination result in the step S13 is "NO", the processing in FIG. 12 is terminated. On the other hand, if the determination result in the step S13 is "YES", with reference to a predetermined ECC block, which is set in advance for the processing of replacing the attributive information, the data value of the above data area 101 is detected (step S 14).

Subsequently, it is determined whether or not the data value detected in the step S14 accords with the attributive information provided with the attribution of the reproduction apparatus (step S15). If the determination result in the step S 15 is "YES", the recording of the information signal in the disk 100 is forbidden as described above, so that the processing of FIG. 12 is terminated. On the other hand, if the determination result in the step S 15 is "NO", the recording operation to the disk 100 is carried out in units of the ECC block (step S16).

Then, the processing with respect to the attributive information working with the error correction processing is provided to the current ECC block (step S17). The processing of the step S 17 will be explained below with reference to FIG. 13.

In FIG. 13, it is determined whether or not the ECC block to be processed comprises a predetermined ECC block, which is set to be replaced with the attributive information (step S21). If the determination result in the step S21 is "YES", as shown in FIG. 11, the data of the data area 101 of the ECC block is replaced with the attributive information representing the attribution of the reproduction apparatus (step S22).

Then, the PO parity and the PI parity are calculated in this state to be added to the ECC block as the error correction code (step S23). Subsequently, returning the attributive information of the data area 101 of the ECC block to the original data, i.e., the data which has not been replaced with the attributive information in the step S22 yet (step S24), the processing is returned to the step S18 of FIG. 12. Therefore, in this stage, the data to be processed in the ECC block has the discordance with the PO parity and the PI parity.

On the other hand, if the determination result in the step S21 is "NO", the error correction processing is carried out without the replacement as described above to add the error correction to the ECC block (step S26) and the processing returns to the step S18 of FIG. 4. In this case, the data in the ECC block is normally provided with the PO parity and the PI parity.

Returning to FIG. 12, the processing proceeds to the next ECC block following the ECC block, of which processing is terminated in the step S16 and the step S17 (step S18). Subsequently, it is determined whether or not all recording operations are terminated (step S19). Then, if the determination result is "NO", the processing returns to the step S16 to repeat the same processing and if the determination result is "YES", the processing of FIG. 12 is terminated.

Alternatively, it is assumed that the recording information is recorded in the data area 100 of a predetermined ECC block also in the prerecorded disk 74, which is supplied from distributors or the like, as the data area 100 of a predetermined ECC block is added with the same error correction code as the error correction code in the processing of FIGS. 12 and 13.

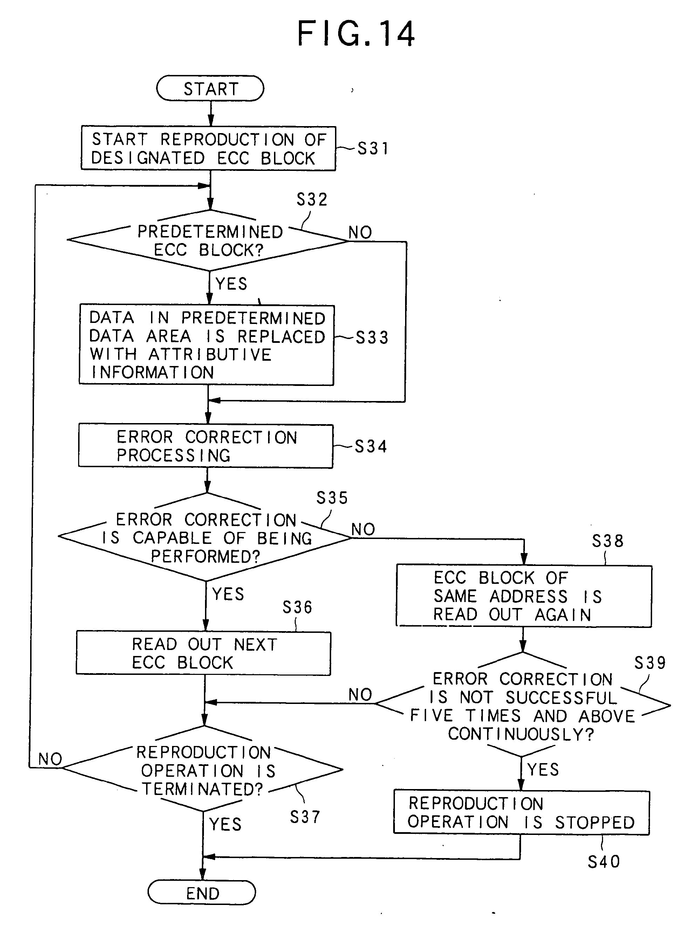

Then, with reference to the flow chart of FIG. 14, the reproduction operation to be carried out in the reproduction apparatus 8 according to the second embodiment will be described below. If the processing of FIG. 14 is started, the reproduction of the designated ECC block in the disk 100 is started in the reproduction apparatus 8 (step S31). Subsequently, it is determined whether or not the ECC block to be processed comprises a predetermined ECC block, which is set to be replaced with the attributive information (step S32).

If the determination result in the step S32 is "YES", the data in the data area 101 of the ECC block is replaced with the attributive information representing the attribution of the reproduction apparatus (step S33). On the other hand, if the determination result in the step S32 is "NO", the processing in the step S33 is not performed.

Subsequently, the error correction processing is carried out with respect to the ECC block (step S34). In the case of the ECC block, of which the data in the data area is replaced with the attributive information, the error correction is accurately performed when the data area 101 has the attributive information representing the reproduction apparatus in response to the processing of FIG. 12. Therefore, it is determined whether or not the error correction is capable of being performed in response to the result of the processing in the step S34 (step S35).

If the determination result in the step S35 is "YES", the next ECC block is read out to continue the reproduction operation (step S36). Then, it is determined whether or not all reproduction operations are terminated in the reproduction apparatus 8 (step S37). If the determination result is "NO", the processing returns to the step S32 to repeat the same processing and if the determination result in the step S35 is "YES", the processing of FIG. 14 is terminated.

On the other hand, if the determination result in the step S35 is "NO", the error correction is not successful, so that the ECC block of the same address is read out again (step S38). Then it is determined whether the error correction is not successful not less than five times continuously (step S39). Thus, repeating the determination of the error correction five times enables to realize more reliable determination.

If the determination result in the step S39 is "NO", the processing proceeds to the step S37. If the determination result in the step S39 is "YES", the reproduction operation to the disk 100 is stopped (step S40) to terminate the processing of FIG. 14. Thus, as a result of carrying out the processing of FIG. 14, the reproduced data is replaced with the attributive information representing the attribution of the reproduction apparatus in the data area 101 of a predetermined ECC block.

As described above, according to the structure of the second embodiment, in the case that the digital signal in association with the contents is propagated via the illegal path, it is possible to prevent the illegal copy thereafter depending on the presence or the absence of the attributive information and the result of the error correction processing. Alternatively, it is possible to prevent the illegal copy of the prerecorded disk 74 as well as the disk, in which the information signal is recorded by the recording apparatus. Thus, it is possible to improve the protection level by the copyright for the contents by making use of the existing error correction processing without complicating the structure of the apparatus.

As described above, according to the present invention, the recording is controlled by adding the attributive information representing the attribution of a predetermined apparatus to the information signal, so that it is possible to effectively prevent the propagation of the contents, which are illegally copied, and to provide a copyright protection method, by which the contents is capable of being strongly protected by the copyright.

The invention may be embodied in other specific forms without departing from the spirit or essential characteristics thereof. The present embodiments are therefore to be considered in all respects as illustrative and not restrictive, the scope of the invention being indicated by the appended claims rather than by the forgoing description and all changes which come within the meaning and range of equivalency of the claims are therefore intended to be embraces therein.

## Claims

1. A copyright protection method for adding copy control information to an information signal in association with contents which are protected under copyright, the information signal comprising an image data signal, **characterized in that** the method comprises the processes of:
adding attributive information to the information signal reproduced by reproduction apparatus (3, 6), the attributive information representing the attribution of the reproduction apparatus (3, 6) and the attributive information being generated by replacing a portion of the image data signal when the information signal is reproduced by the reproduction apparatus; and
controlling the recording of the information signal on the basis of the copy control information and the attribution information.

2. The copyright protection method according to claim 1, **characterized in that** the attributive information is generated by replacing a portion of a frame image data of the information signal in accordance with a predetermined pattern in association with the reproduction apparatus.

3. The copyright protection method according to claim 1, **characterized in that** the attributive information is generated by replacing a position of a luminance of the image data signal.

4. The copyright protection method according to claim 2, **characterized in that** the process of controlling the recording of the information signal is a process to forbid the recording the information signal in the case that the copy control information represents a code for allowing the copy of the contents only once and the attributive information represents the predetermined pattern.

5. A recording method of recording an information signal in association with contents, which are protected under copyright, in a recording medium (71, 72, 73) in accordance with copy control information, the information signal comprising an image data signal, **characterized in that** the method comprises the processes of:
discriminating the copy control information of the information signal and the attributive information, the attributive information representing attribution of a reproduction apparatus (3, 6) and the attributive information being generated by replacing a portion of the image data signal when the information signal is reproduced by the reproduction apparatus; and
controlling the recording of the information signal on the basis of the discriminating result.

6. The recording method according to claim 5, **characterized in that** the attributive information is generated by replacing a portion of a frame image data of the information signal in accordance with a predetermined pattern in association with the reproduction apparatus.

7. The recording method according to claim 6, wherein the process of controlling the recording of the information signal is a process to forbid the recording of the information signal in association with the contents in the case that the copy control information represents a code for allowing the copy of the contents only once and the attributive information represents the predetermined pattern.

8. A recording apparatus (2, 4) for recording an information signal in association with contents, which are protected under copyright, in a recording medium (71, 73) in accordance with copy control information, the information signal comprising an image data signal, **characterized in that** the apparatus comprises:
a discriminating device (21) for discriminating the copy control information of the information signal and attributive information, the attributive information representing attribution of a reproduction apparatus (3, 6) and the attributive information being generated by replacing a portion of the image data signal when the information signal is reproduced by the reproduction apparatus; and
a controlling device (21) for controlling the recording of the information signal on the basis of the discriminating result.

9. The recording apparatus (2, 4) according to claim 8, **characterized in that** the attributive information is generated by replacing a portion of a frame image data of the information signal in accordance with a predetermined pattern in association with the reproduction apparatus.

10. The recording apparatus (2, 4) according to claim 9, wherein the controlling device (21) forbids the recording of the information signal in association with the contents in the case that the copy control information represents a code for allowing the copy of the contents only once and the attributive information represents the predetermined pattern.
